# DEMANDE DE BREVET EUROPEEN

(11) **EP 4 714 798 A1**
(43) Date de publication de la demande: **25.03.2026**
(21) Numéro de dépôt: 24201751.5
(22) Date de dépôt: 20.09.2024
(51) Int. Cl.: B62D 35/00, B62D 35/02, B62D 37/02

(54) **VÉHICULE DOTÉ D'UN ACTIONNEMENT SIMPLIFIÉ DE DEUX DÉFLECTEURS PLACÉS DEVANT LES ROUES AVANT**

(71) Demandeur: Renault s.a.s, 92100 Boulogne Billancourt (FR)
(72) Inventeur: HAZELARD, Fabien, 78280 GUYANCOURT (FR)

(57) **Abrégé**

L'invention concerne un véhicule comprenant deux roues avant (3), un diffuseur (4) de bouclier avant et deux déflecteurs (1, 2) rigides placés chacun devant une roue avant (3), ledit véhicule comprenant un mécanisme d'actionnement des deux déflecteurs (1, 2) permettant à chacun desdits deux déflecteurs (1, 2) de passer par rotation autour d'un axe de rotation (107, 108) s'étendant le long d'un axe transversal Y et horizontal du véhicule, d'une position active à une position inactive.

Selon l'invention, le véhicule comprend une face avant technique (101) présentant un segment inférieur (102) s'étendant le long d'un axe transversal Y du véhicule, le mécanisme d'actionnement comprenant un moteur électrique unique (106) qui est fixé au segment inférieur (102) de la face avant technique (101), et deux axes de rotation (107, 108) situés dans le prolongement l'un de l'autre le long d'un axe transversal Y du véhicule, chacun desdits deux axes de rotation (107, 108) prenant naissance sur le moteur électrique unique (106) et se terminant par un déflecteur (1, 2).

## Description

La présente invention concerne un véhicule doté d'un actionnement simplifié de deux déflecteurs placés devant les roues avant

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Actuellement, certains véhicules automobiles sont dotés de deux déflecteurs placés chacun devant une roue avant, chacun desdits déflecteurs se présentant sous la forme d'un volet rigide et de faible épaisseur s'étendant dans un plan transversal et vertical YZ du véhicule. Ces volets généralement fixés à un diffuseur de bouclier avant, ont pour but de dévier l'air situé devant le véhicule lors d'une phase de roulage de celui-ci, afin que cet air n'impacte pas directement les roues avant. De cette façon, ces déflecteurs améliorent l'aérodynamisme du véhicule avec pour conséquence :
- une diminution de la consommation de carburant dudit véhicule,
- une diminution de l'émission de particules de CO2,
- une augmentation de l'autonomie du véhicule.

Il a observé que ces déflecteurs ont peu d'influence lorsque le véhicule roule à une vitesse inférieure ou égale à 70km/h, mais jouent un rôle déterminant sur la consommation de carburant lorsque ledit véhicule roule à des vitesses supérieures à 70km/h. Pour répondre à ce besoin ciblé de mise en oeuvre des déflecteurs, il a été envisagé de pouvoir piloter en rotation ces déflecteurs, entre une position active déployée et une position inactive rangée. Pour ce faire, chaque déflecteur est monté en rotation autour d'un axe de rotation transversal Y et horizontal du véhicule, et peut ainsi passer par pivotement autour dudit axe, de la position active pour laquelle il saille sous le véhicule en s'étendant dans un plan transversal et vertical YZ du véhicule, à la position inactive pour laquelle il s'étend dans un plan horizontal en étant rabattu contre une paroi horizontale du véhicule. Ces volets sont pilotés automatiquement en fonction de la vitesse du véhicule, au moyen d'une unité centrale de calcul qui est embarquée dans le véhicule. Lorsque les données d'entrée de cette unité centrale indiquent qu'il faut placer les volets dans l'une des deux positions précédentes, ladite unité centrale active un moteur électrique qui est associé au volet et qui provoque le déplacement dudit volet pour le placer dans la position voulue.

Un véhicule selon l'invention est doté d'un mécanisme d'actionnement simplifié des deux volets permettant auxdits deux volets d'être placés dans l'une des deux positions active ou inactive.

L'invention a pour objet un véhicule comprenant deux roues avant, un diffuseur de bouclier avant et deux déflecteurs rigides placés chacun devant une roue avant, ledit véhicule comprenant un mécanisme d'actionnement des deux déflecteurs permettant à chacun desdits deux déflecteurs de passer par rotation autour d'un axe de rotation s'étendant le long d'un axe transversal Y et horizontal du véhicule, d'une position active pour laquelle il saille sous le véhicule devant une roue avant en s'étendant dans un plan vertical et transversal YZ du véhicule, à une position inactive pour laquelle il s'étend horizontalement en étant rangé contre le diffuseur.

Selon l'invention, le véhicule comprend une face avant technique présentant un segment inférieur s'étendant le long d'un axe transversal Y du véhicule, le mécanisme d'actionnement des deux déflecteurs comprenant un moteur électrique unique qui est fixé au segment inférieur de la face avant technique, et deux axes de rotation situés dans le prolongement l'un de l'autre le long d'un axe transversal Y du véhicule, chacun desdits deux axes de rotation prenant naissance sur le moteur électrique unique et se terminant par un déflecteur. Pour rappel, une face avant technique ou FAT, est un élément de structure qui se trouve en avant du bloc moteur et qui s'étend généralement suivant une direction Y du véhicule, et dans certains cas dans un plan transversal et vertical YZ du véhicule. Cette FAT a pour fonction essentielle de supporter différents organes du véhicule, tels que par exemple un ensemble de radiateurs du bloc moteur de celui-ci.

L'originalité d'un véhicule selon l'invention est double :
- il intègre un seul moteur électrique pour piloter le déplacement en rotation des deux déflecteurs, soit pour atteindre la position active, soit pour atteindre la position inactive,
- la FAT qui a pour fonction originelle de supporter un organe tel que par exemple un radiateur, supporte également une partie du mécanisme d'actionnement des deux déflecteurs. L'un des principes de l'invention est de s'appuyer sur une pièce déjà présente dans la véhicule, à savoir la FAT, pour fixer une partie du mécanisme d'actionnement des deux déflecteurs, évitant d'avoir à concevoir une pièce spécifique de support dudit mécanisme d'actionnement. Un déflecteur est assimilable à un volet plan, rigide et indéformable. Les deux déflecteurs occupent simultanément la même position, à savoir la position active ou la position inactive. En effet, dans le cadre de la présente invention, il n'existe aucune configuration pour laquelle l'un des deux volets est dans la position active et l'autre volet est dans la position inactive. La position des volets dans la position active ou dans la position inactive, est gérée par une unité centrale de calcul en fonction notamment de la vitesse du véhicule. Le segment inférieur de la FAT occupe une position centrale dans le véhicule, de sorte que par rapport à un axe longitudinal et central du véhicule, ledit segment présente la même longueur de chaque côté dudit axe longitudinal et central. Les deux axes de rotation sont ainsi placés de part et d'autre du moteur électrique unique et sont parfaitement alignés le long d'un même axe transversal Y du véhicule.

Selon une caractéristique possible de l'invention, le moteur électrique unique est fixé au segment inférieur de la face avant technique en étant placé le long d'un axe longitudinal et central du véhicule. Le mécanisme d'actionnement des deux déflecteurs respecte ainsi une certaine symétrie, permettant de mieux équilibrer les actions de pilotage du déplacement des deux déflecteurs.

Selon une caractéristique possible de l'invention, le moteur électrique est fixé par vissage sur le segment inférieur de la face avant technique. Préférentiellement, le segment inférieur de la FAT présente une zone de surépaisseur spécialement conçue pour la fixation du moteur électrique du mécanisme d'actionnement, afin de ne pas perturber la fonction initiale de la FAT qui est de supporter un organe tel que par exemple un radiateur.

Selon une caractéristique possible de l'invention, chaque déflecteur est fixé à un axe de rotation sans possibilité de mouvement par rapport à celui-ci, chaque axe de rotation étant cylindrique de sorte qu'une mise en rotation dudit axe de rotation autour de son axe de révolution entraine un pivotement simultané du déflecteur avec la même amplitude angulaire. De cette manière, chaque déflecteur se déplace simultanément en rotation avec l'axe de rotation auquel il est solidarisé, et avec la même amplitude angulaire que celle dudit axe de rotation.

Selon une caractéristique possible de l'invention, la face avant technique présente deux bras de soutien dotés chacun d'une ouverture à travers laquelle passe un axe de rotation, chacun des deux bras de soutien étant situé entre le moteur électrique unique et le déflecteur qui est fixé à l'axe de rotation correspondant. Généralement, puisque le déflecteur est plutôt placé dans une zone d'extrémité de l'axe de rotation qui le porte, il est souhaitable d'utiliser un bras de soutien pour empêcher notamment que ledit axe de rotation présente une légère zone de courbure. De cette manière, chaque axe de rotation présente une première extrémité qui est supportée par le moteur électrique unique, et une deuxième extrémité qui est supportée par le bras de soutien.

Selon une caractéristique possible de l'invention, la face avant technique comprend deux montants verticaux encadrant le segment inférieur, chacun des deux bras de soutien prenant naissance sur l'un desdits montants verticaux. De cette manière, les deux bras de soutien sont très éloignés l'une de l'autre, chacun desdits deux bras étant placé à proximité d'un déflecteur.

Selon une caractéristique possible de l'invention, les deux bras de soutien sont parallèles entre eux et s'étendent suivant un axe longitudinal X du véhicule. De cette manière, puisque les deux axes de rotation s'étendent le long d'un axe transversal Y du véhicule, les deux bras de soutien s'étendent perpendiculairement auxdits deux axes de rotation.

Selon une caractéristique possible de l'invention, une bague autolubrifiante est placée dans l'ouverture de chacun des bras de soutien de sorte que chaque axe de rotation passe à travers ladite bague autolubrifiante. Cette bague autolubrifiante contribue ainsi au déplacement en rotation de l'axe de rotation dans le bras de soutien. En effet, elle va supprimer toute rugosité de contact entre l'axe de rotation et le bras de soutien, et va ainsi rendre le déplacement en rotation dudit axe dans ledit bras plus fluide.

Selon une caractéristique possible de l'invention, le segment inférieur de la face avant technique présente une zone en polymère possédant des bossages dans lesquels ont été intégrés des inserts taraudés pour assurer une fixation par vissage du moteur électrique unique. La présence de cette zone de bossages en polymère va ainsi éviter toute fixation du moteur électrique unique directement dans le segment inférieur de la FAT, qui pourrait biaiser la fonction initiale de support d'un organe de ladite FAT. De cette manière, l'intégrité structurelle de la FAT est préservée, permettant à ladite FAT de supporter efficacement l'organe pour lequel elle a été conçue.

L'invention a pour autre objet un procédé d'actionnement des deux déflecteurs d'un véhicule selon l'invention.

Selon l'invention, le procédé comprend les étapes suivantes :
- une étape de réception par une unité centrale de calcul embarquée d'un signal signifiant un changement de position des deux déflecteurs,
- une étape d'envoi par ladite unité centrale de calcul d'un signal de commande au moteur électrique unique,
- une étape d'activation du moteur électrique unique qui va provoquer une mise en rotation simultanée des deux déflecteurs dans le même sens.

Un véhicule selon l'invention présente l'avantage de posséder un mécanisme d'actionnement des deux déflecteurs qui est simplifié grâce à l'utilisation d'un seul moteur électrique, placé entre les deux déflecteurs dans une position centrale. Il en résulte une réduction des coûts et une fabrication du véhicule qui est plus courte et plus facile. Il a de plus l'avantage de tirer bénéfice d'une pièce déjà présente dans le véhicule, à savoir la FAT, pour arrimer une partie du mécanisme d'actionnement des deux déflecteurs, évitant ainsi d'avoir à concevoir une pièce spécifique destinée à cet arrimage. Il résulte de cet état de fait, également des gains de coût et une plus grande rapidité de montage du véhicule.

On donne ci-après une description détaillée d'un mode de réalisation préféré d'un véhicule selon l'invention, en se référant aux figures suivantes :
[Fig. 1] La figure 1 est une vue en perspective d'une partie avant d'un véhicule selon l'invention,
[Fig. 2] La figure 2 est une vue en perspective d'une zone spécifique de la partie avant de la figure 1, montrant un déflecteur et le moteur électrique unique,
[Fig. 3] La figure 3 est la vue en perspective de la figure 2 mais en léger décalé,
[Fig. 4] La figure 4 est une vue d'un tronçon d'un segment inférieur d'une façade avant technique d'un véhicule selon l'invention,
[Fig. 5] La figure 5 est une vue en perspective d'une zone d'une partie avant d'un véhicule selon l'invention, montrant un déflecteur en l'absence du diffuseur du bouclier.

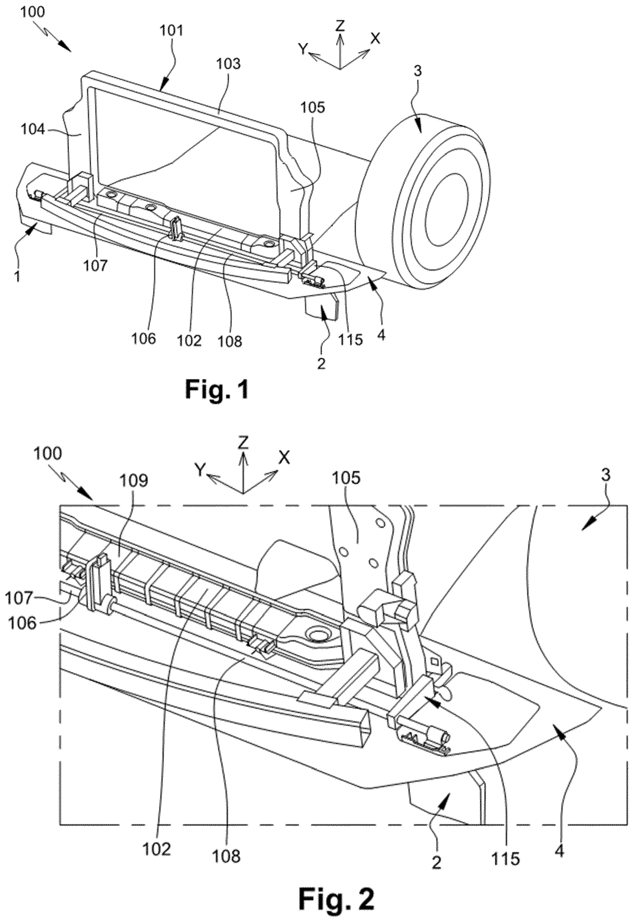

En se référant à la figure 1, certains véhicules automobiles sont dotés de deux déflecteurs 1, 2 placés chacun devant une roue avant 3, chacun desdits déflecteurs 1,2 se présentant sous la forme d'un volet rigide et de faible épaisseur, s'étendant dans un plan transversal et vertical YZ du véhicule. Ces déflecteurs 1, 2 qui sont généralement fixés à un diffuseur 4 de bouclier avant, ont pour but de dévier l'air situé devant le véhicule lors d'une phase de roulage de celui-ci, afin que cet air n'impacte pas directement les roues avant 3 placées juste derrière lesdits déflecteurs 1, 2. De cette façon, ces déflecteurs 1,2 améliorent l'aérodynamisme du véhicule avec pour principales conséquences :
- une diminution de la consommation de carburant dudit véhicule,
- une réduction de l'émission de particules CO2,
- une augmentation de l'autonomie du véhicule.

Il a été observé que ces déflecteurs 1,2 ont peu d'influence lorsque le véhicule roule à une vitesse inférieure ou égale à 70km/h, mais jouent un rôle déterminant sur l'aérodynamisme du véhicule, lorsque ledit véhicule roule à des vitesses supérieures à 70km/h. Pour répondre à ce besoin ciblé de mise en oeuvre des déflecteurs 1, 2, il a été envisagé de pouvoir piloter en rotation ces déflecteurs 1, entre une position active déployée comme cela est illustré aux figures 1, 2, 5, et une position inactive rangée.

En se référant aux figures 1, 2 5, chaque déflecteur 1, 2 est assimilable à un volet rigide et plan, ayant une forme sensiblement parallélépipédique, ledit volet étant plein et indéformable. Dans la position active, le déflecteur 1, 2 s'étend sous le diffuseur 4 de bouclier, dans un plan transversal et vertical YZ du véhicule comme cela est illustré aux figures 1, 2, 5. Dans la position inactive, le déflecteur 1, 2 s'étend dans un plan sensiblement horizontal, en étant rangée contre une paroi horizontale dudit diffuseur 4 de bouclier. Entre la position active et la position inactive, chaque déflecteur pivote d'environ 90°.

Un véhicule 100 selon l'invention comprend une unité centrale de calcul embarquée et un mécanisme d'actionnement des deux déflecteurs 1, 2. De cette manière, en fonction notamment de la vitesse du véhicule, cette unité centrale de calcul envoie un signal au mécanisme d'actionnement pour déplacer les déflecteurs, soit dans la position active, soit dans la position inactive.

Un véhicule 100 selon l'invention comprend également une face avant technique 101 ou FAT, qui est un élément de structure du véhicule 100 qui se trouve en avant du bloc moteur et qui s'étend généralement suivant une direction Y du véhicule, et dans certains cas dans un plan transversal et vertical YZ du véhicule. Cette FAT 101 a pour fonction essentielle de supporter différents organes du véhicule 100, tels que par exemple un ensemble de radiateurs du bloc moteur de celui-ci. En se référant à la figure 1, la face avant technique 101 d'un véhicule selon l'invention, comprend un segment inférieur 102 horizontal, un segment supérieur 103 horizontal qui est placé au-dessus et au droit du segment inférieur 102 horizontal, et deux montants verticaux 104, 105 joignant des extrémités dudit segment inférieur 102 à des extrémités dudit segment supérieur 103. Les deux segments 102, 103 et les deux montants 104, 105 définissent ainsi un cadre rectangulaire qui s'étend dans un plan transversal et vertical YZ du véhicule 100, les grands côtés du cadre étant matérialisés par les deux segments horizontaux 102, 103, et les deux petits côtés dudit cadre étant matérialisés par les deux montants verticaux 104, 105. Le cadre est dans une position centrée dans le véhicule de sorte qu'un axe longitudinal et central du véhicule passe par le milieu du segment horizontal inférieur 102 et par le milieu du segment horizontal supérieur 103.

Le mécanisme d'actionnement des deux déflecteurs 1, 2 comprend un moteur électrique unique 106, qui est commun aux deux déflecteurs 1, 2 et deux axes de rotation 107, 108 au bout de chacun desquels est fixé un déflecteur 1, 2.

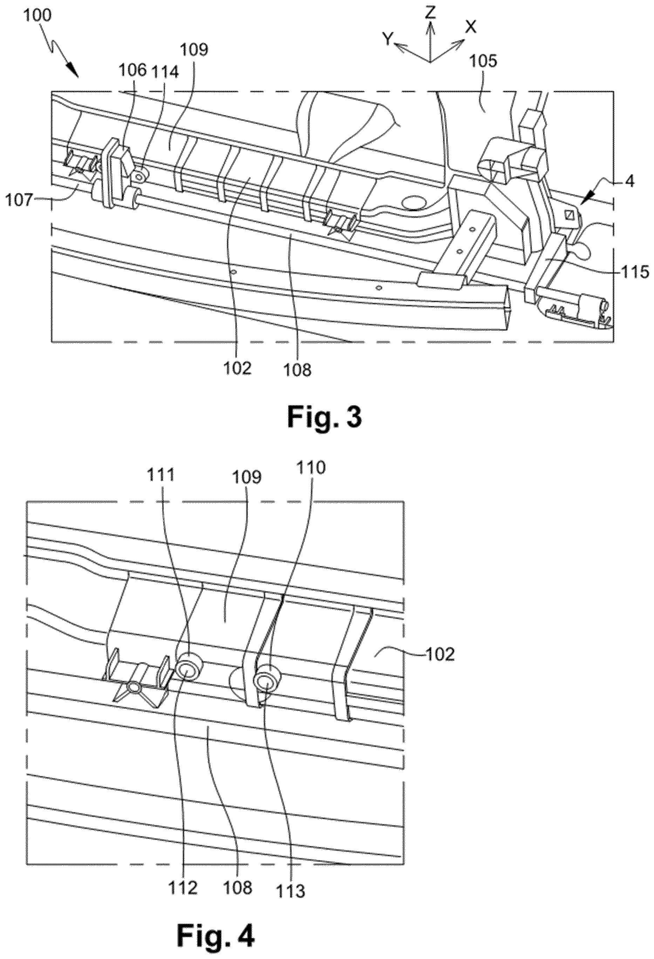

En se référant aux figures 2, 3 et 4, le moteur électrique unique 106 est fixé à une zone centrale 109 du segment inférieur 102 de la FAT par vissage. En se référant à la figure 4, cette zone centrale 109 est composée d'une surépaisseur en polymère dans laquelle sont réalisés deux bossages 110, 111. Deux inserts métalliques taraudés 112, 113 sont placés dans lesdits bossages 110, 111 pour permettre à deux vis de fixer le moteur électrique unique 106 au segment inférieur 102 de la FAT 101. De façon préférentielle, la surépaisseur en polymère est surmoulée autour des deux inserts métalliques 112, 113.

En se référant à la figure 3, le moteur électrique unique 106 est placé dans un boitier qui est prolongée par deux pattes de fixation 114 possédant chacune une ouverture. Le moteur électrique unique 106 est fixé au segment inférieur 102 de la FAT 101, en superposant d'abord les deux pattes de fixation 114 du boitier enfermant ledit moteur électrique 106 aux deux inserts métalliques 112, 113 de la surépaisseur en polymère, puis en introduisant une vis dans chaque ouverture des pattes de fixation 114 avant de la visser dans l'insert taraudé 112, 113 correspondants.

En se référant aux figures 1, 2, 3 chaque axe de rotation 107, 108 prend naissance dans le boitier enfermant le moteur électrique unique 106 et s'étend horizontalement suivant un axe transversal Y du véhicule en longeant le segment inférieur 102 de la FAT 101. En d'autres termes, chaque axe de rotation 107, 108 comporte une première extrémité qui est insérée dans le boitier délimitant le moteur électrique unique 106, et une deuxième extrémité qui est la plus éloignée dudit boitier et à laquelle est fixé le déflecteur 1, 2 correspondant. Ces deux axes de rotation 107, 108 sont cylindriques et chaque déflecteur 1, 2 est fixé à l'un desdits deux axes de rotation 107, 108 en s'étendant radialement par rapport à celui-ci. De cette manière, une mise en rotation d'un axe de rotation 107, 108 autour de son axe de révolution, entraine une mise en rotation simultanée du déflecteur 1, 2 avec la même amplitude angulaire. Les deux axes de rotation 107, 108 sont dans la parfaite continuité l'un de l'autre si bien qu'ils s'étendent le long du même axe transversal Y du véhicule 100, en étant placés de chaque côté du moteur électrique 106 unique.

Puisque chaque axe de rotation 107, 108 présente une certaine longueur entre sa première et sa deuxième extrémité, un bras de soutien 115 solidarisé à la face avant technique 101, permet de supporter ledit axe de rotation 107, 108, afin notamment qu'il ne courbe pas. Chaque bras de soutien 115 est solidarisé à un montant vertical 104, 105 de la FAT 101, plus précisément à une zone externe dudit montant vertical 104, 105, de sorte que ledit bras de soutien 115 se retrouve dans la continuité du segment inférieur 102 de ladite FAT 101, en étant séparé dudit segment inférieur 102 par le montant vertical 104, 105 qui le porte. Chaque montant vertical 104, 105 de la FAT 101 présente une surépaisseur en polymère de laquelle émerge le bras de soutien 115, de sorte que ladite surépaisseur et ledit bras de soutien viennent de matière.

En se référant figures 2, 3 et 5, chaque bras de soutien 115 est allongé et s'étend le long d'un axe longitudinal X du véhicule 100. Il est à préciser que les deux axes de rotation 107, 108 sont parallèles au segment inférieur 102 de la FAT 101 en étant placés devant ledit segment inférieur 102.

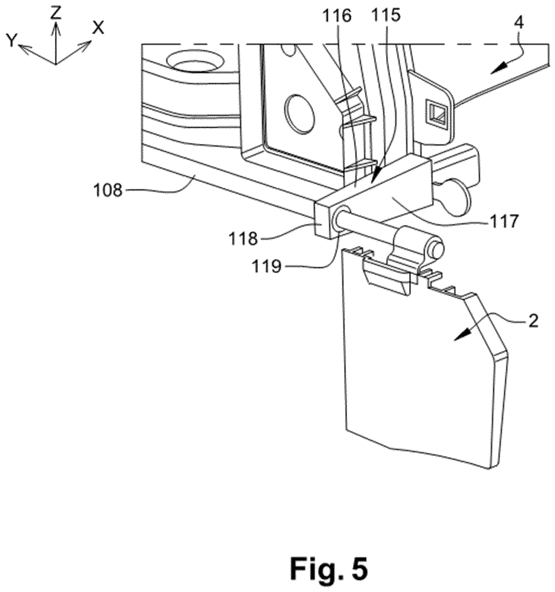

En se référant à la figure 5, chaque bras de soutien 115 a une forme parallélépipédique, en étant délimité par une face supérieure 116 et une face inférieure horizontales, deux faces latérales 117 verticales, une surface avant 118 et une surface arrière verticale. Une zone avant du bras de soutien 115 possède un orifice traversant 118 de forme cylindrique et destiné au passage de l'axe de rotation 107, 108. Cet orifice traversant débouche sur les deux faces latérales 117 verticales du bras de soutien. Chaque bras de soutien 115 est placé entre la première extrémité de l'axe de rotation 107, 108 et la deuxième extrémité de celui-ci, à laquelle est solidarisé le déflecteur 1, 2. Une bague autolubrifiante 119 peut être insérée dans l'orifice traversant de chaque bras de soutien 115. Cette bague 119 va légèrement diminuer la section de passage de l'orifice traversant et va faciliter la rotation de l'axe de rotation 107, 108 autour de son axe de révolution lorsque le déflecteur va passer d'une position à l'autre. Cette bague 119 autolubrifiante va éliminer toute rugosité entre l'axe de rotation 107, 108 et le bras de soutien 115 correspondant et va donc favoriser le déplacement dudit axe de rotation 107, 108 dans ledit bras de soutien 115.

Un procédé d'actionnement des deux déflecteurs 1, 1 d'un véhicule 100 selon l'invention, comprend les principales étapes suivantes :
- une étape de réception par l'unité centrale de calcul embarquée dans le véhicule 100 d'un signal signifiant qu'un changement de position des deux déflecteurs 1, 2 est nécessaire,
- une étape d'envoi par ladite unité centrale de calcul d'un signal de commande au moteur électrique unique 106 ,
- une étape d'activation du moteur électrique unique 106 qui va provoquer une mise en rotation simultanée des deux déflecteurs 1, 2 dans le même sens pour atteindre la position ciblée

Afin de lever toute ambiguïté, il est supposé que dans le cadre de la présente invention, les déflecteurs 1, 2 ne peuvent occuper qu'une position active ou une position inactive.

## Revendications

1. Véhicule comprenant deux roues avant (3), un diffuseur (4) de bouclier avant et deux déflecteurs (1, 2) rigides placés chacun devant une roue avant (3), ledit véhicule comprenant un mécanisme d'actionnement des deux déflecteurs (1, 2) permettant à chacun desdits deux déflecteurs (1, 2) de passer par rotation autour d'un axe de rotation (107, 108) s'étendant le long d'un axe transversal Y et horizontal du véhicule, d'une position active pour laquelle il saille sous le véhicule devant une roue avant (3) en s'étendant dans un plan vertical et transversal YZ du véhicule, à une position inactive pour laquelle il s'étend horizontalement en étant rangé contre le diffuseur (4), **caractérisé en ce que** le véhicule comprend une face avant technique (101) présentant un segment inférieur (102) s'étendant le long d'un axe transversal Y du véhicule, et **en ce que** le mécanisme d'actionnement des deux déflecteurs comprend un moteur électrique unique (106) qui est fixé au segment inférieur (102) de la face avant technique (101), et deux axes de rotation (107, 108) situés dans le prolongement l'un de l'autre le long d'un axe transversal Y du véhicule, chacun desdits deux axes de rotation (107, 108) prenant naissance sur le moteur électrique unique (106) et se terminant par un déflecteur (1, 2).

2. Véhicule selon la revendication 1, **caractérisé en ce que** le moteur électrique unique (106) est fixé au segment inférieur (102) de la face avant technique (101) en étant placé le long d'un axe longitudinal et central du véhicule.

3. Véhicule selon l'une quelconque des revendications 1 ou 2, **caractérisé en ce que** le moteur électrique unique (106) est fixé par vissage sur le segment inférieur (102) de la face avant technique (101).

4. Véhicule selon l'une quelconque des revendications 1 à 3, **caractérisé en ce que** chaque déflecteur (1, 2) est fixé à un axe de rotation (107, 108) sans possibilité de mouvement par rapport à celui-ci, et **en ce que** chaque axe de rotation (107, 108) est cylindrique de sorte qu'une mise en rotation dudit axe de rotation (107, 108) autour de son axe de révolution entraine un pivotement simultané du déflecteur (1, 2) avec la même amplitude angulaire.

5. Véhicule selon l'une quelconque des revendications 1 à 4, **caractérisé en ce que** la face avant technique (101) présente deux bras de soutien (115) dotés chacun d'une ouverture à travers laquelle passe un axe de rotation (107, 108), et **en ce que** chacun des deux bras de soutien (115) est situé entre le moteur électrique unique (106) et le déflecteur (1, 2) qui est fixé à l'axe de rotation (107, 108) correspondant.

6. Véhicule selon la revendication 5, **caractérisé en ce que** la face avant technique (101) comprend deux montants verticaux (104, 105) encadrant le segment inférieur (102), et **en ce que** chacun des deux bras de soutien (115) prend naissance sur l'un desdits montants verticaux (104, 105).

7. Véhicule selon l'une quelconque des revendications 5 ou 6, **caractérisé en ce que** les deux bras de soutien (115) sont parallèles entre eux et s'étendent suivant un axe longitudinal X du véhicule.

8. Véhicule selon l'une quelconque des revendications 5 à 7, **caractérisé en ce qu'**une bague autolubrifiante (119) est placée dans l'ouverture de chacun des bras de soutien (115) de sorte que chaque axe de rotation (107, 108) passe à travers ladite bague autolubrifiante (119).

9. Véhicule selon l'une quelconque des revendications 1 à 8, **caractérisé en ce que** le segment inférieur (102) de la face avant technique (101) présente une zone en polymère (109) possédant des bossages (110, 111) dans lesquels ont été intégrés des inserts taraudés (112, 113) pour assurer une fixation par vissage du moteur électrique unique (106).

10. Procédé d'actionnement des deux déflecteurs (1, 2) d'un véhicule selon l'une quelconque des revendications 1 à 9, **caractérisé en ce qu'**il comprend les étapes suivantes :
- une étape de réception par une unité centrale de calcul embarquée d'un signal signifiant un changement de position des deux déflecteurs (1, 2),
- une étape d'envoi par ladite unité centrale de calcul d'un signal de commande au moteur électrique unique (106),
- une étape d'activation du moteur électrique unique (106) qui va provoquer une mise en rotation simultanée des deux déflecteurs (1, 2) dans le même sens.
